(19) Europäisches Patentamt
European Patent Office
Office européen des brevets

(11) **EP 2 671 282 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(21) Anmeldenummer: **12711583.0**

(22) Anmeldetag: **01.03.2012**

(51) Int Cl.:
*H01M 8/1018* (2016.01)  *H01M 4/86* (2006.01)
*H01M 8/04082* (2016.01)

(86) Internationale Anmeldenummer:
**PCT/EP2012/053497**

(87) Internationale Veröffentlichungsnummer:
**WO 2012/123259 (20.09.2012 Gazette 2012/38)**

(54) **ELEKTRISCHER ENERGIESPEICHER**

ELECTRIC ENERGY STORAGE

ACCUMULATEUR D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2011 DE 102011005599**

(43) Veröffentlichungstag der Anmeldung:
**11.12.2013 Patentblatt 2013/50**

(73) Patentinhaber: **Siemens Aktiengesellschaft 80333 München (DE)**

(72) Erfinder:
• **DRENCKHAHN, Wolfgang 91058 Erlangen (DE)**
• **LANDES, Harald 90607 Rückersdorf (DE)**

(56) Entgegenhaltungen:
**US-A1- 2004 202 924    US-A1- 2006 204 829
US-A1- 2011 033 769    US-B2- 6 620 539**

EP 2 671 282 B1

## Beschreibung

Die Erfindung betrifft einen elektrischen Energiespeicher nach dem Oberbegriff des Patentanspruchs 1.

Wiederaufladbare Batterien, beispielsweise auf Lithiumionenbasis, haben in der mobilen Welt eine stetig zunehmende Bedeutung erlangt. Heute werden jedoch durch die Nutzung erneuerbarer Energien zusätzlich Großspeicher benötigt. Dabei geht es oft darum, die Energiedichte, die man einspeichern kann, zu erhöhen. Aus der US 2006/0204829 A1 ist eine Festkörperbrennstoffzellenanordnung bekannt, bei der in der positiven Elektrode ein Redoxpaar vorliegt, welches die Reaktion eines Metalls mit Sauerstoff zu dem Metalloxid beinhaltet. Die US 2011/0033769 A1 zeigt eine Oxidionen-Batterie bei der ein Metall einer Metall/Metalloxid-Elektrode durch Sauerstoffionen oxidiert wird.

Die Aufgabe der Erfindung besteht darin, einen Energiespeicher und ein Verfahren zum Betreiben eines Energiespeichers bereitzustellen, bei dem die speicherbare Energiedichte gegenüber dem Stand der Technik weiter verbessert wird.

Der erfindungsgemäße elektrische Energiespeicher nach Patentanspruch 1 umfasst eine positive Elektrode sowie eine negative Elektrode, die durch einen Sauerstoff-Ionen leitenden Elektrolyten voneinander getrennt sind. Die negative Elektrode weist dabei ein Reservoir mit einem gasdurchlässigen oxidierbaren Material und ein darin befindliches gasförmiges, Sauerstoff austauschendes Redoxpaar auf. Die Erfindung zeichnet sich dadurch aus, dass die positive Elektrode ebenfalls ein Reservoir (16) mit einem gasdurchlässigen oxidierbaren Material umfasst und ein Sauerstofftransport durch eine sauerstoffhaltige gasförmige Verbindung erfolgt.

Das Sauerstoff austauschende Redoxpaar in der negativen Elektrode kann in einer üblichen Ausgestaltung der Erfindung Wasserstoff in elementarer Form und Wasser sein, weil diese beiden Verbindungen während der Betriebstemperatur der Batterie, also bei ca. 500°C bis 900°C, gasförmig sind. Wasserstoff und Wasser reagieren je nach Betriebsmodus des Energiespeichers mit Sauerstoff in Form einer Redoxreaktion. Aus diesem Grund wird die Kombination von molekularem Wasserstoff und Wasser als Redoxpaar bezeichnet. Dieses Redoxpaar dient zum Transport der Sauerstoffionen vom Elektrolyten zu einem oxidierbaren Material, das beispielsweise in Form eines Metalles oder Metalloxides vorliegen kann. Das Redoxpaar übernimmt somit eine Trägerfunktion für den Sauerstoff vom Elektrolyten zu dem oxidierbaren Material, indem sie gespeichert werden. Unter gasförmig oder Gasphase wird der gasförmige Aggregatszustand verstanden.

Die Erfindung zeichnet sich dadurch aus, dass auch die positive Elektrode ein Sauerstoff austauschendes Redoxpaar aufweist, das in einem gasdurchlässigen Material gasförmig vorliegt und ebenfalls den Transport von Sauerstoff zwischen dem Elektrolyten und dem Reservoir an oxidierbarem Material sicherstellt. Hierbei handelt es sich bei dem sauerstoffhaltigen Redoxpaar jedoch bevorzugt um molekularen Sauerstoff, wobei durch den molekularen Sauerstoff eine Trägerfunktion an sich erfüllt wird. Es ist dabei nicht nötig, eine reduzierte Substanz analog dem molekularen Wasserstoff in der negativen Elektrode zurückzuschicken und wieder oxidieren zu lassen, was auch als Shuttlemechanismus bezeichnet werden kann. Der Trägermechanismus von Sauerstoffionen zum Elektrolyten erfolgt auf diese Weise in der positiven Elektrode sehr schnell, in der Regel schneller als der Shuttlemechanismus in der negativen Elektrode, da kein Rücktransport von z. B. Wasserstoff notwendig ist. Die Verwendung von molekularem Sauerstoff als Trägermaterial wird dadurch erleichtert, da in der positiven Elektrode ein relativ hoher Druck vorherrschen kann, der bevorzugt zwischen 0,5 und 1,1 bar liegen kann.

Dennoch kann es auch zweckmäßig sein, ein gasförmiges Redoxpaar zum Sauerstofftransport in der positiven Elektrode einzusetzen. Dieses Redoxpaar sollte ebenfalls bei einem Gesamtdruck zwischen 0,4 und 1,1 bar vorliegen.

Dabei ist es erfindungsgemäss zweckmäßig, dass die positive Elektrode gegenüber der Atmosphäre geschlossen ist, wobei durch diese Maßnahme der Partialdruck der gasförmigen Verbindung aufrecht erhalten werden kann.

Die negative Elektrode weist zudem ferner bevorzugt eine Zwischenschicht zwischen dem Reservoir, dem gasdurchlässigen oxidierbaren Material und dem Festkörperelektrolyten auf, das der reversiblen elektrochemischen Umwandlung von Sauerstoff einer gasförmigen Verbindung (z. B. $H_2O$) in Sauerstoffionen dient. Hierbei hat sich als Zwischenschicht ein Metallkeramikverbundwerkstoff, ein sogenanntes Cermet, als besonders zweckdienlich herausgestellt, insbesondere wenn dessen metallische Phase auf Nickel basiert.

Ebenfalls ist die Anwendung einer Zwischenschicht bei der positiven Elektrode zweckmäßig, die zwischen dem Reservoir und dem Elektrolyten angeordnet ist und die ebenfalls zur elektrochemischen Umwandlung zwischen Sauerstoff aus einer Gasphase und Sauerstoffionen im Elektrolyten dient.

Bei der Zwischenschicht der positiven Elektrode handelt es sich beispielsweise um Perowskit.

Das gasdurchlässige Material der positiven und der negativen Elektrode ist z. B. in Form eines edleren und eines unedleren Metalles ausgestaltet, die je nach Ladezustand des Energiespeichers mehrere Male hauptsächlich elementar oder oxidiert vorliegen. Bei Teilentladung liegt eine Mischform aus oxidierten Bestandteilen und elementarem Metall vor. Das oxidierbare Material kann auch in Form eines Oxides vorliegen, das je nach Ladezustand in einer höheren bzw. niedrigen Oxidationsstufe vorliegt (z. B. $Fe_2O_2$ und $Fe_3O_4$).

Des weiteren sei ein Verfahren zum Betreiben eines elektrischen Energiespeichers beschrieben, wobei in einem Entladungsprozess an einer positiven Elektrode ein gasdurchlässiges Oxid reduziert wird, der dabei entstehende Sauerstoff wird in Form einer sauerstoffhaltigen Verbindung (z. B. molekularer Sauerstoff) durch das gasdurchlässige Oxid zu einer Zwischenschicht geführt und wird an dieser zu Sauerstoffionen reduziert. Die Sauerstoffionen werden wiederum durch eine an die Zwischenschicht angrenzenden Festkörperelektrolyten geleitet und reagieren an der negativen Elektrode unter Abgabe von Elektronen mit einer gasförmigen oxidierbaren Substanz (z. B. Wasserstoff), wobei diese zu einem bei der Betriebstemperatur des Energiespeichers gasförmigen Verbindung aufoxidiert (z. B. zu Wasser) wird und gasförmig in ein Reservoir mit einem gasdurchlässigen oxidierbaren Material diffundiert. Dieses oxidierbare Material wird durch die gasförmige Verbindung oxidiert, wobei die gasförmige Verbindung gleichzeitig zu der oxidierbaren gasförmigen Substanz reduziert wird, die wiederum für eine weitere Reaktion mit Sauerstoffionen an den Elektrolyten zurückgeführt wird.

Bei der gasförmigen oxidierbaren Substanz und der daraus resultierenden gasförmigen aufoxidierten Verbindung handelt es sich wiederum um das bereits zu Patentanspruch 1 beschriebene Redoxpaar, das beispielsweise in der Paarung von molekularem Wasserstoff ($H_2$) und Wasserdampf ($H_2O$) bestehen kann.

Die in der positiven Elektrode auftretende sauerstoffhaltige gasförmige Verbindung ist bevorzugt in Form von molekularem Sauerstoff ausgestaltet, wobei aber auch hier ein Redoxpaar zweckmäßig sein kann. Der Vorteil der Erfindung besteht auch hier wieder darin, dass es zwischen dem Festkörperreservoir z. B. bestehend aus Metall bzw. Metalloxid und dem ionenleitenden Festkörperelektrolyten einen schnellen Transport durch die beschriebene sauerstoffhaltige Verbindung, insbesondere durch den elementaren Sauerstoff, gibt. Hierdurch kann dieses Reservoir, das in Form eines gasdurchlässigen Metalloxids ausgestaltet ist, relativ dick gestaltet werden, und somit eine besonders hohe Energiedichte pro Zelle erzeugt werden.

In einer besonderen Ausgestaltungsform der Erfindung liegt der Partialdruck der sauerstoffhaltigen Verbindung in der positiven Elektrode zwischen 0,4 bar und 1,1 bar, insbesondere zwischen 0,5 bar und 1 bar. Insbesondere ist es zweckmäßig, wenn der Partialdruck zwischen 0,9 und 1,1 bar liegt.

Bei dem Metalloxid und der positiven Elektrode kann es sich im geladenen Zustand in einer bevorzugten Ausgestaltungsform um Kupfer(II)-Oxid handeln, das beim Entladen des Energiespeichers zu Kupfer(I)-Oxid reduziert wird.

Ferner sei ein Verfahren zum Betreiben eines elektrischen Energiespeichers beschrieben, wobei dieses Verfahren den Ladeprozess des Energiespeichers beschreibt. Hierbei wird in einer negativen Elektrode eine gasförmige oxidierbare Substanz in einem Reservoir mit einem gasdurchlässigen Oxid mit diesem so zur Reaktion gebracht, dass das Oxid reduziert wird und die oxidierbare Substanz oxidiert wird. Die oxidierbare Substanz und die oxidierte Substanz können wieder als das bereits beschriebene Redoxpaar (Beispiel $H_2/H_2O$) bezeichnet werden. Die oxidierte Substanz wird in einem weiteren Verfahrensschritt an einen Elektrolyten geleitet, der an die negative Elektrode angrenzt und bei der Erzeugung von Sauerstoffionen wird die oxidierte Substanz reduziert, wobei als Nebenprodukt wieder die oxidierbare Substanz (z. B. das $H_2$) entsteht. Die Sauerstoffionen hingegen werden durch den Festkörperelektrolyten geleitet und an eine Zwischenschicht, die Bestandteil der positiven Elektrode ist, zu einer gasförmigen, sauerstoffhaltigen Verbindung oxidiert. Diese sauerstoffhaltige Verbindung, die beispielsweise aus molekularem Sauerstoff besteht, wird durch ein Reservoir eines gasdurchlässigen Oxids, z. B. Kupfer(I)-Oxid, geleitet und wird dabei dieses Oxid zu einem Lithium-Metalloxid, beispielsweise ein Kupfer(II)-Oxid, oxidieren.

Weitere Ausgestaltungsformen und weitere Merkmale der Erfindung werden anhand der folgenden Figuren näher erläutert. Dabei zeigen die Figuren nur beispielhafte Ausführungen der Erfindung, die keine Einschränkung des Schutzumfangs darstellen.

Dabei zeigen

Figur 1    eine grundsätzliche Darstellung der Wirkungsweise einer Rechargeable Oxide-Ion Battery (ROB) für den Ladezustand und den Entladezustand,

Figur 2    einen schematischen Aufbau eines elektrischen Energiespeichers in einer positiven Elektrode und einer negativen Elektrode, wobei mehrere Zellen übereinander angeordnet sind.

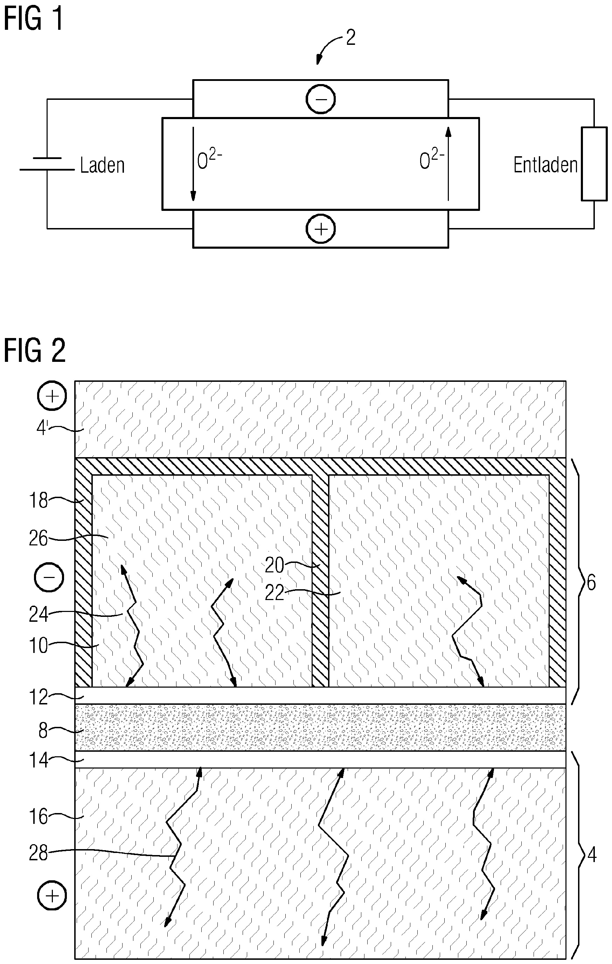

In der Figur 1 ist eine schematische Darstellung eines wiederaufladbaren elektrischen Energiespeichers 2 basierend auf einem Oxidionentransport, eine so genannte Rechargeable Oxide-Ion Battery (ROB), dargestellt, auf deren Prinzip auch der hier beschriebene elektrische Energiespeicher 2 beruht. Dieser Energiespeicher 2 umfasst eine positive Elektrode 4 und eine negative Elektrode 6, die durch einen Festkörperelektrolyten 8 getrennt sind, wobei zwischen beiden Elektroden 4, 6 ein ionischer Transport von Sauerstoff ($O^{2-}$) erfolgt. Dieser Sauerstoffionenfluss erfolgt im Entladungsprozess von der positiven Elektrode zur negativen Elektrode, im Ladungsprozess in umgekehrter Richtung, wobei die Polarität der Elektroden erhalten bleibt. Die Betriebstemperatur dieser Batterie liegt üblicherweise zwischen 500°C und 1000°C. Diese Temperatur ist insbesondere für den ionischen Transport im Festkörperelektrolyt zweckmäßig.

In Figur 2 ist eine Darstellung eines elektrischen Energiespeichers gegeben, der eine positive und eine negative Elektrode aufweist. Im Folgenden soll ein Entladungsprozess dieses Energiespeichers, also dieser Batterie, beschrieben werden. Die positive Elektrode 4 umfasst ein Reservoir 16 aus einem oxidierbaren Material, beispielsweise Kupfer(II)-Oxid. Dieses Oxid ist in poröser Form ausgestaltet, es ist beispielsweise als Granulat geschüttet oder als kaltgepresstes Material dargestellt.

Beim Entladen der Batterie enthält das Reservoir 16 ein höheres Oxid des oxidierbaren Materials, also beispielsweise Kupfer(II-Oxid, das nach der folgenden prinzipiellen Gleichung reduziert wird:

$$XO \rightarrow X + \frac{1}{2}O_2. \qquad\qquad (Gl.\ 1a)$$

Im konkreten Beispiel wird demnach Kupfer(II)-Oxid zu Kupfer(I)-Oxid reduziert,

$$2CuO \rightarrow Cu_2O + \frac{1}{2}O_2\ , \qquad\qquad (Gl.\ 1b)$$

der dabei freiwerdende Sauerstoff nach Gleichung 1 wandert als molekularer Sauerstoff $O_2$ durch die Kanäle, die durch offene Poren des Reservoirs 16 gebildet werden, zu einer Zwischenschicht 14 der positiven Elektrode 4. Diese Zwischenschicht 14 besteht beispielsweise aus einer porösen Perowskitstruktur, wie z. B. Lanthanstrontiummanganat. In dieser Zwischenschicht wird der Sauerstoff zu Sauerstoffionen reduziert, die in Form von $O^{2-}$-Ionen durch den Festkörperelektrolyten diffundieren. Der Festkörperelektrolyt besteht in vorteilhafter Weise aus einem Metalloxid, wie z. B. dotiertem Zirkon oder Ceroxid. Das Dotierungsmaterial dient zur Erzeugung von Sauerstoffleerstellen im Festkörperelektrolyten zum Transport der $O^{2-}$-Ionen, d.h. also zum Transport des $O^{2-}$. An der negativen Elektrode 6 befindet sich ebenfalls bevorzugt angrenzend an den Festkörperelektrolyten 8 eine weitere Zwischenschicht 12, die beispielsweise aus einem Metall-Keramik-Verbundwerkstoff, einem so genannten Cermet, besteht, wobei das Cermet eine metallische Phase auf Nickelbasis enthält. Diese metallische Phase muss so gewählt werden, dass sie unter dem Sauerstofftransport in der negativen Kathode nicht oxidiert wird, damit eine elektronische Leitfähigkeit erhalten bleibt.

In dieser Zwischenschicht 12 der negativen Elektrode 6 werden die Sauerstoffionen mit einer gasförmigen oxidierbaren Substanz, also einem gasförmigen Reduktionsmittel, insbesondere in Form von molekularem Wasserstoff ($H_2$) zu Wasser reagieren. Es erfolgt demnach folgende Reaktion:

$$H_2 + O^{2-} \rightarrow H_2O + 2e^- \qquad\qquad (Gl.\ 2)$$

Bei der Reaktion nach Gleichung 2 werden Elektronen freigesetzt, diese fließen zunächst über das Ni im Cermet bis zu einem Kontakt des elektronisch leitfähigen Tragkörpers 18 (beispielsweise aus Edelstahl) und über dessen Verbindung zu einer bipolaren Platte und zu einer Nachbarzelle ab. Die angrenzende Nachbarzelle ist in Figur 2 durch die oberhalb der negativen Elektrode 6 erneut dargestellte positive Elektrode veranschaulicht, die mit 4' bezeichnet ist.

Die Zwischenschicht 12 der negativen Elektrode 6 ist bevorzugt aus einem Metallkeramikverbundmaterial, einem so genannten Cermet, ausgestaltet. Die Zwischenschicht 12 weist dabei metallische Phasen auf, die eine elektronische Leitfähigkeit gewährleisten. Zudem weist die Zwischenschicht 12 gegebenenfalls eine elektrolytisch leitende Phase in Form eines Metalloxides auf, wie sie beispielsweise in Form von Zirkonoxid ausgestaltet sind.

In üblichen Festkörperbatterien nach dem Stand der Technik, die ebenfalls über einen Festkörperelektrolyten ein ionisiertes Gas, wie Sauerstoff, transportieren, erfolgt die Reaktion des negativ geladenen Sauerstoffes zum Oxid des Materials der negativen Elektrode, wobei diese aufoxidiert wird. Dadurch wird das Elektrodenmaterial durch die Oxidation verbraucht. Wenn das leitfähige Elektrodenmaterial verbraucht ist, ist die Batterie entladen.

Bei dem vorliegenden elektrischen Energiespeicher wird jedoch an der negativen Elektrode ein Reaktionspartner für die Sauerstoffionen zur Verfügung gestellt, beispielsweise in Form von Wasserstoff. Wie bereits erwähnt, reagiert der Sauerstoff mit dem Wasserstoff unter Abgabe von Elektronen, wobei an der Elektrodenoberfläche im steuerbaren Fall ein Gleichgewicht von $H_2$ und $H_2O$ vorliegt. Hierbei handelt es sich um ein Redoxpaar, das bei der Betriebstemperatur des Energiespeichers in gasförmiger Form vorliegt. Nun ist an der negativen Elektrode ein Tragkörper 18 angebracht, der gegebenenfalls Stege 20 aufweist, die wiederum Kammern 22 voneinander trennen. Diese Kammern 22 sind mit einem oxidierbaren Material, beispielsweise in Form eines elementaren Metalles, gefüllt. Dieses elementare Metall, das bevorzugt aus Eisen besteht, liegt als Pulver oder als poröser Presskörper vor oder es ist in die Poren einer inerten Matrix aus Keramik z. B. $YO_2$ eingebracht. Das Redoxpaar $H_2/H_2O$, das in gasförmiger Phase als Trägermaterial für den Sauerstoff dient, diffundiert (vgl. Pfeile 24) durch die Kammer 22 in das oxidierbare Material 26 durch dessen Porosität hindurch und reagiert mit dem oxidierbaren Material 26 in Form nachfolgender Gleichung:

$$y\ H_2O + x\ Me \rightarrow Me_xO_Y + y\ H_2, \qquad\qquad (Gl.\ 3)$$

wobei Me für ein Metall steht. Das Metall Me sollte bevorzugt eine geringere Elektronegativität aufweisen als das Metall der Zwischenschicht 12, das dort die elektronische leitende Phase bildet. Wenn dies der Fall ist, ist die Neigung des ionisierten Sauerstoffs mit dem $H_2$ zu reagieren und das daraus entstandene $H_2O$ wiederum mit dem oxidierbaren Metall zu reagieren, höher als mit dem Anodenmetall zu reagieren, wodurch das Zwischenschichtmaterial vor Oxidation geschützt wird.

Der bei dieser Reaktion entstehende molekulare Wasserstoff $H_2$ wandert wieder zurück zur Zwischenschicht 12 und reagiert erneut an der Zwischenschicht 12 mit dem dort auftretenden ionischen Sauerstoff $O^{2-}$. Das Redoxpaar $H_2/H_2O$ übernimmt somit eine Trägerfunktion für den Sauerstoff, die man auch als Shuttle-Mechanismus bezeichnen kann.

Bei dem hier beschriebenen Redoxpaar $H_2/H_2O$ handelt es sich um ein bevorzugtes Redoxpaar, das jedoch auch durch ein anderes Redoxpaar ausgetauscht werden kann, dessen Komponenten bei der Betriebstemperatur der Batterie von etwa 600°C in gasförmiger Form, unter Umständen auch in flüssiger Form, in ausreichender Konzentration vorliegen. Bedingung ist, dass der aufoxidierte Anteil, analog dem $H_2O$, eine Reaktion mit dem oxidierbaren Material 10, das in der Kammer 22 vorliegt, z. B. Eisen, eine Oxidationsreaktion eingeht.

Da bevorzugt Sauerstoffionen über den Elektrolyten ausgetauscht werden, sollte das Redoxpaar durch folgende prinzipielle Reaktionsgleichung ablaufen:

$$n\,X + m/2\,O_2 \rightarrow X_nO_m, \qquad \text{(Gl. 4)}$$

wobei X ein weiteres geeignetes chemisches Element sein kann. Diese chemische Reaktionsgleichung sollte folgende Eigenschaften erfüllen.

1.

$$\Delta G_{x,\,xnOy} \approx \Delta G_{Me,\,MepOq} \qquad \text{(Gl. 5)}$$

D.h., die bei der Reaktion frei werdende Gibb'sche freie Enthalpie (der Reaktion des Redoxpaares $X:XO_2$) soll in etwa der freien Gibb'schen Enthalpie der Reaktion zwischen dem Metall und dem Metalloxid entsprechen, das durch die Aufoxidation des Metalles Me gemäß Gleichung 3 entsteht.

2. Der Partialdruck $p_x$ und der Partialdruck $P_{xnom}$ müssen groß genug sein, um eine Stromdichte im Bereich von etwa 0,04 A/cm$^2$ zu erzielen. So muss bei dem Redoxpaar $H_2/H_2O$ aus gaskinetischen Gründen die im Gleichgewicht beim Potential der negativen Elektrode mit dem geringen Druck vorliegende Komponente mindestens $10^{-8}$ bar erreichen. Dies führt z. B. für eine Manganelektrode bei 600°C (1,25 V) auf mindestens $p_{H2O} = 10^{-8}$ bar und $p_{H2} = 10^{-5}$ bar. Vorteilhaft ist es dementsprechend, die Partialdrücke wie folgt zu wählen: $p_{H2} = 1$ bar und $P_{H2O} = 10^{-3}$ bar.

Als Alternative zu dem Redoxsystem $H_2/H_2O$ bieten sich beispielsweise Metalldämpfe und ihre flüchtigen Oxide, Hydroxide und Hydride an, sofern sie bei ausreichenden Partialdrücken vorliegen.

Der Aufbau des elektrischen Energiespeichers 2 eignet sich auch insbesondere zu einem Stapelaufbau, was in Figur 2 dadurch angedeutet wird, dass oberhalb des Tragkörpers 18 eine weitere positive Elektrode 4' angeordnet ist, die den unteren Teil einer weiteren Zelle darstellt. Die Grundfläche einer Zelle kann beispielsweise 150 mm x 150 mm betragen.

Der gesamte elektrische Energiespeicher 2 ist thermisch isoliert und gekapselt angeordnet, da die Betriebstemperatur oberhalb von 500°C liegt. Bei dem hinreichend großen Volumen - zu - Oberflächenverhältnis bei guter Isolierung des gesamten Energiespeichers 2 kann die Aufrechterhaltung der Betriebstemperatur allein durch die zwangsläufig auftretende Verlustleistung durch die inneren Widerstände in der Batterie erhalten werden. Gegebenenfalls muss im lastfreien Betrieb ein kleiner Strom aufrechterhalten werden, um ein langsames Abkühlen zu verhindern. Ein derartig beschriebener Energiespeicher eignet sich insbesondere als stationärer Energiespeicher im Dauerbetrieb. Er kann jedoch auch dazu dienen, überschüssige Netzenergien aufzunehmen, die beispielsweise dann entstehen, wenn Windkrafträder oder andere erneuerbare Energiequellen Energie produzieren und diese Energie im Netz nicht benötigt werden sollte. Somit kann überschüssige Energie aus erneuerbaren Energiequellen in derartigen Batterien eingespeist werden.

Zum Einspeisen von elektrischer Energie in einen derartigen Energiespeicher, also zum Aufladen des Energiespeichers, wird die Stromrichtung zwischen positiver Elektrode und negativer Elektrode umgedreht. Dadurch werden Elektronen im Bereich des Tragkörpers 18 des in diesem Fall oxidierten Materials in der Kammer 22 ($Me_xO_y$, vgl. Gl. 3) eingeleitet, wobei das $Me_xO_y$ zu Me reduziert wird. Gleichzeitig wird die Redoxreaktion des Redoxpaares in der negativen Elektrode, hier am Beispiel des $H_2/H_2O$ so ablaufen, dass Wasser in gasförmiger Form entsteht. Dieses Wasser wandert zur Zwischenschicht 12 der negativen Elektrode 6. Dort wird es wieder reduziert, wobei $O^{2-}$-Ionen

entstehen. Neben den $O_2$-Ionen entsteht, wie bereits beschrieben, molekularer Wasserstoff $H_2$, der wieder zurück in die Kammer 22 gelangt und dort mit dem Metalloxid $Me_xO_y$ wieder reagiert, wodurch der Shuttlemechanismus von neuem beginnt.

Die an der Zwischenschicht 12 vorliegenden Sauerstoffionen wandern über den Festkörperelektrolyten 8 zur Zwischenschicht 14 der positiven Elektrode 4. Dort werden sie zu molekularem Sauerstoff $O_2$ umgewandelt, der entsprechend der Pfeile 28 durch das Reservoir 16 der positiven Elektrode 4 fließt. Die positive Elektrode enthält ebenfalls ein Festkörper-Redoxpaar aus einem Metall und dessen Oxid oder aus zwei Oxiden eines Metalls, wobei beim Ladeprozess die Reaktion zwischen dem Sauerstoff und dem im Reservoir 16 vorliegenden Metall als Metalloxid stattfindet und dieses zum Metalloxid zu einem höheren Oxid aufoxidiert wird. Diese Reaktion kann so lange erfolgen, bis alle Metallatome aus dem Reservoir 16 in einer höheren Oxidationsstufe umgewandelt sind, dann ist die Aufnahmekapazität des elektrischen Energiespeichers erschöpft.

Bei der Verwendung von molekularem Sauerstoff als sauerstoffhaltige Verbindung, die den Sauerstofftransport im Reservoir 16 gewährleistet, besteht anders als im beschriebenen Shuttlemechanismus bei der negativen Elektrode der Vorteil, dass kein Rückfluss des reduzierten Bestandteils des Redoxpaares erfolgen muss. Der Austausch von Sauerstoff über den molekularen Sauerstoff in der positiven Elektrode funktioniert zügiger als der Shuttlemechanismus allgemein.

**Patentansprüche**

1. Elektrischer Energiespeicher (2) umfassend eine positive Elektrode (4) sowie eine negative Elektrode (6), die durch einen Sauerstoff-Ionen leitenden Elektrolyten (8) voneinander getrennt sind, wobei die negative Elektrode (6) ein Reservoir (10) mit einem gasdurchlässigen oxidierbaren Material und ein darin befindliches gasförmiges, Sauerstoff austauschendes Redoxpaar umfasst, wobei dass die positive Elektrode (4) ebenfalls ein Reservoir (16) mit einem gasdurchlässigen oxidierbaren Material umfasst und ein Sauerstofftransport durch eine sauerstoffhaltige gasförmige Verbindung erfolgt und **dadurch gekennzeichnet, dass** die positive Elektrode (4) gegenüber der Atmosphäre geschlossen ist.

2. Energiespeicher nach Anspruch 1, **dadurch gekennzeichnet, dass** der Sauerstofftransport in der positiven Elektrode (4) in Form von molekularem Sauerstoff erfolgt.

3. Energiespeicher nach Anspruch 1, **dadurch gekennzeichnet, dass** der Sauerstofftransport in der positiven Elektrode (4) in Form eines sauerstoffhaltigen, gasförmigen Redoxpaares erfolgt.

4. Energiespeicher nach einem der vorhergehenden Ansprüche, **dadurch gekennzeichnet, dass** die negative Elektrode (6) ferner eine Zwischenschicht (12) zwischen dem Reservoir (10) mit einem gasdurchlässigen oxidierbaren Material und dem Festkörperelektrolyten (8) zur reversiblen elektrochemischen Umwandlung von Sauerstoff einer Gasphase in Sauerstoffionen umfasst.

5. Energiespeicher nach Anspruch 4, **dadurch gekennzeichnet, dass** die Zwischenschicht (12) einen Nickel basierten Keramik-Metall-Verbundstoff umfasst.

6. Energiespeicher nach einem der vorhergehenden Ansprüche, **dadurch gekennzeichnet, dass** die positive Elektrode (4) ferner eine Zwischenschicht (14) zwischen dem Reservoir (16) und dem Elektrolyten (8) zur reversiblen elektrochemischen Umwandlung von Sauerstoff zwischen einer Gasphase und Sauerstoffionen 1 umfasst.

7. Energiespeicher nach Anspruch 6, **dadurch gekennzeichnet, dass** die Zwischenschicht (14) ein Material mit Perowskitstruktur umfasst.

8. Energiespeicher nach einem der vorhergehenden Ansprüche, **dadurch gekennzeichnet, dass** das gasdurchlässige Material der positiven Elektrode (4) ein Metall ist, das je nach Ladezustand elementar oder oxidiert vorliegt.

**Claims**

1. Electric energy store (2) comprising a positive electrode (4) and a negative electrode (6) which are separated from one another by an oxygen ion conducting electrolyte (8), wherein the negative electrode (6) comprises a reservoir (10) having a gas-permeable oxidisable material and, contained therein, a gaseous, oxygen-exchanging redox pair, wherein the positive electrode (4) likewise comprises a reservoir (16) having a gas-permeable oxidisable material and oxygen transport is effected by means of an oxygen-containing gaseous compound and **characterized in that** the positive electrode (4) is closed with respect to the atmosphere.

2. Energy store according to claim 1, **characterised in that** the oxygen transport in the positive electrode (4) is realized in the form of molecular oxygen.

3. Energy store according to claim 1, **characterised in that** the oxygen transport in the positive electrode (4) is realized in the form of an oxygen-containing, gaseous redox pair.

4. Energy store according to one of the preceding claims, **characterised in that** the negative electrode (6) additionally comprises an intermediate layer (12) between the reservoir (10) having a gas-permeable oxidisable material and the solid-state electrolyte (8) for the reversible electrochemical conversion of oxygen of a gas phase into oxygen ions.

5. Energy store according to claim 4, **characterised in that** the intermediate layer (12) comprises a nickel-based ceramic-metal composite material.

6. Energy store according to one of the preceding claims, **characterised in that** the positive electrode (4) additionally comprises an intermediate layer (14) between the reservoir (16) and the electrolyte (8) for the reversible electrochemical conversion of oxygen between a gas phase and oxygen ions 1.

7. Energy store according to claim 6, **characterised in that** the intermediate layer (14) comprises a material having a perovskite structure.

8. Energy store according to one of the preceding claims, **characterised in that** the gas-permeable material of the positive electrode (4) is a metal which is present in elementary or oxidized form, depending on charge state.

## Revendications

1. Accumulateur (2) d'énergie électrique, comprenant une électrode (4) positive ainsi qu'une électrode (6) négative, qui sont séparées l'une de l'autre par un électrolyte (8) conduisant les ions oxygène, l'électrode (6) négative comprenant un réservoir (10) ayant un matériau oxydable perméable au gaz et un couple rédox gazeux et échangeant de l'oxygène qui s'y trouve, l'électrode (4) positive comprend également un réservoir ayant un matériau oxydable perméable au gaz et un transport d'oxygène a lieu par un composé gazeux oxygéné et **caractérisé en ce que** l'électrode (4) positive est fermée par rapport à l'atmosphère.

2. Accumulateur d'énergie suivant la revendication 1, **caractérisé en ce que** le transport d'oxygène a lieu dans l'électrode (4) positive sous la forme d'oxygène moléculaire.

3. Accumulateur d'énergie suivant la revendication 1, **caractérisé en ce que** le transport d'oxygène a lieu dans l'électrode (4) positive sous la forme d'un couple rédox gazeux oxygéné.

4. Accumulateur d'énergie suivant l'une des revendications précédentes, **caractérisé en ce que** l'électrode (6) négative comprend, en outre, une couche (12) intermédiaire entre le réservoir (10), ayant un matériau oxydable perméable au gaz, et l'électrolyte (8) solide pour la transformation électrochimique réversible de l'oxygène d'une phase gazeuse en ions oxygène.

5. Accumulateur d'énergie suivant la revendication 4, **caractérisé en ce que** la couche (12) intermédiaire comprend un matériau composite céramique-métal à base de nickel.

6. Accumulateur d'énergie suivant l'une des revendications précédentes, **caractérisé en ce que** l'électrode (4) positive comprend, en outre, une couche (14) intermédiaire entre le réservoir (16) et l'électrolyte (8) pour la transformation électrochimique réversible de l'oxygène entre une phase gazeuse et des ions oxygène.

7. Accumulateur d'énergie suivant la revendication 6, **caractérisé en ce que** la couche (14) intermédiaire comprend un matériau ayant une structure de perovskite

8. Accumulateur d'énergie suivant l'une des revendications précédentes, **caractérisé en ce que** le matériau perméable au gaz de l'électrode (4) positive est un métal, qui, suivant l'état de charge, se présente sous forme élémentaire ou oxydée.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060204829 A1
- US 20110033769 A1